# EUROPEAN PATENT APPLICATION

(11) **EP 3 057 051 A1**
(43) Date of publication of application: **17.08.2016**
(21) Application number: 15305220.4
(22) Date of filing: 13.02.2015
(51) Int. Cl.: G06Q 20/32

(54) **Peer to peer transaction system**

(71) Applicant: Atos SE, 95870 Bezons (FR)
(72) Inventor: Scholtens, Wouter, 1211LC Hilversum (NL)
(74) Representative: Novagraaf Technologies

(57) **Abstract**

This invention relates to a method for performing a transaction between users of communication devices, comprising steps of:
- a first device (D1) and a second device (D2) broadcasting respective unique identifiers (uuid1, uuid2), through a proximity radio communication network;
- said first device detecting the unique identifier (uuid2) of said second device; and transmitting to an active transaction service (S2) a request for creation of a transaction with said second device; said request containing information about said first device and said second device;
- said active transaction service (S2) creating said transaction on the basis of said information

## Description

### FIELD OF THE INVENTION

The invention relates to transactions, especially to financial transactions, between users using communication devices.

### BACKGROUND OF THE INVENTION

Thanks to the increasing spread of access to the Internet and of the online availability of products, e-business as well as online financial transactions are developing fast, resulting in the elaboration of a large number of enabling technical solutions.

These solutions encompass transactions performed between a client and a distant entity like a bank, a retailer, a virtual shop, etc. and transactions between a client and an entity physically collocated. This latter case aims in facilitating the transactions and especially the payment by, for instance, replacing the smart cards or the physical money by the mobile communication device. Accordingly, the client can pay for a product by simply using its device.

The solutions developed so far concern mostly infrastructure and methods for performing transactions, e.g. financial transactions, between a client and a larger entity like a bank, an online shop, etc. Accordingly the underlying technical solution and mechanisms are non-symmetrical and the roles of each party are different.

### SUMMARY OF THE INVENTION

The object of the present invention consists in proposing an alternative model, wherein parties to a transaction can be considered as equal peers.

It allows establishing and managing transactions between 2 or more individual users: such transactions were not possible as such, according to the above-mentioned state of the art.

This object is achieved with a method for performing a transaction between users of communication devices, comprising steps of:
- a first device and a second device broadcasting respective unique identifiers, through a proximity radio communication network;
- said first device detecting the unique identifier of said second device; and transmitting to an active transaction service a request for creation of a transaction with said second device; said request containing information about said first device and said second device;
- said active transaction service creating said transaction on the basis of said information

Preferred embodiments comprise one or more of the following features, which can be taken separately or together, either in partial combination or in full combination.
- said active transaction service provides to said first device a confirmation message enabling said first device to place a transaction confirmation message to said active transaction service, said transaction confirmation message comprising the required information for said active transaction service to complete said transaction between said devices;
- said transaction confirmation message comprises data determined by inputs of said first user through a human-machine interface of said first device;
- the method comprises a registration step consisting for said devices in sending a registration request containing a private identifier to a registration service, so that said registration service maintains associations between private identifier and unique identifier for each registered device;
- said unique identifiers are assigned by said registration service;
- after said first device detects said unique identifier of said second device, it sends a verification request to said registration service and receives a private data associated with said second device;
- said first device shows to said first user at least a part of said private data to enable said first user to validate the second user;
- said information comprises said second account number and a first account number.

Another aspect of the invention concerns a computer program comprising computer-executable instructions for performing the method previously described, when run onto a data processing unit.

Another aspect of the invention concerns a system comprising at least a first and a second communication devices, and an active transaction service for performing a transaction between users of said communication devices,
- wherein said first device and a second device are adapted for broadcasting respective unique identifiers, through a proximity radio communication network;
- wherein said first device is adapted for detecting the unique identifier of said second device; and transmitting to said active transaction service a request for creation of a transaction with said second device; said request containing information about said first device and said second device;
- and wherein said active transaction service is adapted for creating said transaction on the basis of said information,

Preferred embodiments comprise one or more of the following features, which can be taken separately or together, either in partial combination or in full combination.
- said active transaction service is adapted to complete said transaction in cooperation with a transaction completion service;
- said devices are adapted to perform a registration step consisting in sending a registration request containing a private identifier to a registration service, so that said registration service maintains associations between private identifier and unique identifier for each registered device;
- said unique identifiers are assigned by said registration service;.
- said active transaction service and said registration service are embodied by a same server.
- said active transaction service and said transaction completion service are embodied by two different servers.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows a possible context in which embodiments of the invention can be deployed.
Fig. 2 shows an example flow chart depicting embodiments of the invention.

### DETAILED DESCRIPTION OF THE INVENTION

The invention may concern in general any type of transactions between communication devices which require a sort of control from a trusted entity like for instance a bank or a service provider.

It is naturally the case of financial transactions, i.e. transactions implying money. At least when the amount of money is considered large enough, an interaction with a trusted party is required both for the purpose of authentication of the parties and for actually committing the transfer of money from the account of one party to the account of the other one.

Such financial transactions comprise payments, loans, etc.

The invention applies to any types of communication devices, but preferably to the case where one communication device is a mobile communication device, like a smartphone, a tablet, a laptop computer, etc. so that the dynamic detection of a peer communication network makes sense. The other communication device can be also a mobile one, or a fixed one (e.g. located at business premises).

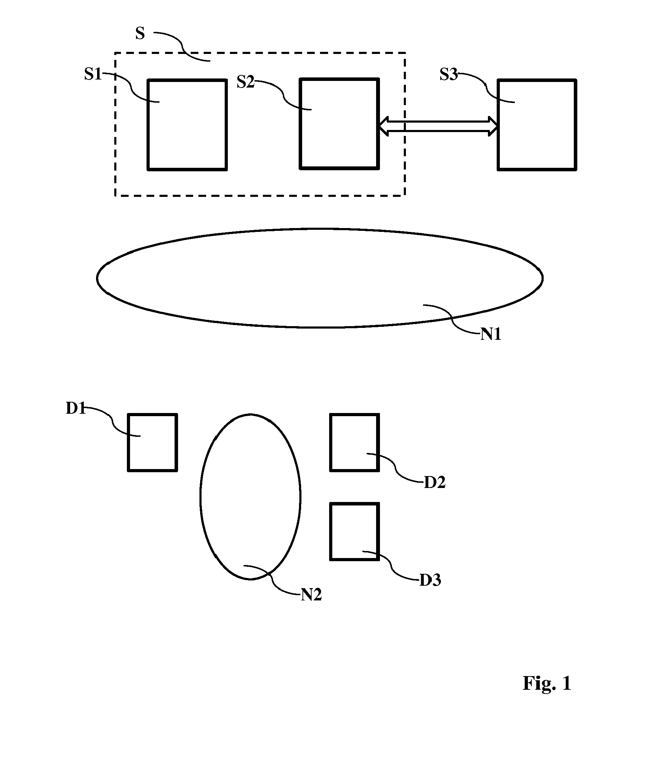

In the example depicted on FIG. 1, two mobile communication devices D1, D2 can interact with a trusted server S accessible through a mobile communication network N1. This mobile communication network can be embodied by any technology enabling wireless connection between a mobile communication device and a distant server, like 3GPP, WiFi, LTE, etc. The trusted server can be connected to a core network like the Internet and accessible through an access network like the mobile communication network.

The mobile communication devices D1, D2 can also be provided with means for connecting to a proximity radio communication network N2. Such a network enables direct communication between devices, i.e. without any base stations or in-between infrastructure.

This proximity radio communication network can comply with technologies like Bluetooth, or NFC (Near Field Communication), for instance.

The term "proximity" refers to the fact that the devices can communicate only if they are close enough. The range allowing communications depend on the technology and other parameters.

The invention can also apply to multi-party transactions involving more than two mobile communication devices. For instance a third communication device D3 can be present and enter in communication with the mobile communication devices D1, D2 through the proximity radio communication network N2.

Multi-party transactions can be useful in the context of several business cases.

For instance, a first user may receive offers for transaction from 2 other users and may select the best one according to some criteria (price, etc.). This application may be broadened to auction systems, wherein the users may refine iteratively their offers until a choice is made by the first user.

The server S may comprise two distinct services, a registration service S1 and an active transaction service S2. The roles of each of these services will be seen below. According to alternate embodiments of the invention, the two services may be implemented by distinct servers, and the invention should therefore be considered as covering various ways of implementing the registration service S1 and active transaction service S2 according to underlying technologies (e.g. via cloud-based delivery models using various types of interfaces and protocols...).

Another service S3 represents a transaction completion service S3 and may be embodied by another server, for instance beholding to a financial entity like a bank.

Through the proximity radio communication network N2, the mobile communication devices D1, D2, D3 can broadcast respective unique identifiers uuid1, uuid2, uuid3. These unique identifiers are representative of the users of the mobile communication devices. For security reasons, however, they may not convey any sensible information about the users (like bank account, name, etc.). For instance, the unique identifiers may be chains of numbers and/or letters, and can be linked to private and sensible information only thanks to association means, embodying needed security mechanisms. These association means may be a database

implemented in the distant trusted server S, for instance, and more particularly within the registration service S 1.

The mobile communication devices may also search for and detect radio activity in the proximity radio communication network N2, so as to be able to detect the unique identifier broadcasted by another mobile communication device.

The unique identifier may be broadcasted according to a protocol known by all mobile communication devices. Then, the latter can immediately react when they detect a unique identifier, meaning that another mobile communication device is present in the neighborhood.

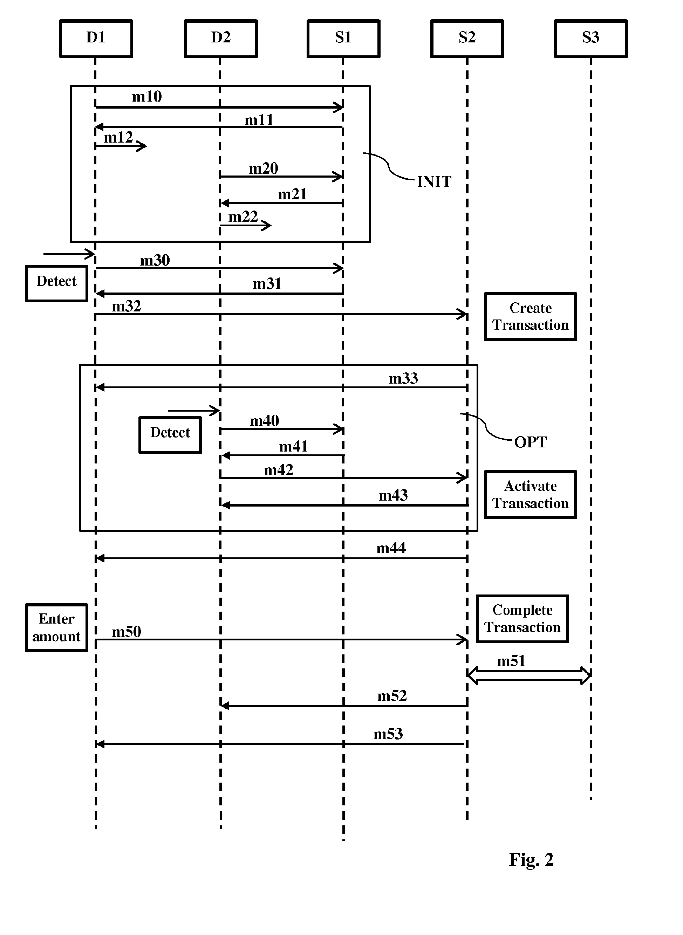

The reaction may consist in triggering the creating of a transaction with this detected mobile communication device. This can be performed according to several embodiments, including the one illustrated by the flow chart of FIG. 2

The embodiment depicted on FIG. 2 relates to a transaction involving 2 mobile communication devices D1, D2, but this example can be broadened to any multiparty transaction.

In this particular embodiment, an initialization phase INIT is implemented.

This initialization phase INIT comprises a registration step consisting for said devices in sending a registration request containing a private identifier to the registration service S1. This allows the registration service to maintain associations between private identifier and unique identifier for each registered device.

More particularly, the device D1 can send a registration request m10 to the registration service S1, which contains a private identifier of the user currently using the mobile communication device D1. This private identifier can be his account number, or any other information allowing the retrieving of an account number by the active transaction service S2 (name, address, social security number, etc.).

At receipt of this request m10, the registration service S1 may assign a unique identifier uuid1 to the requiring mobile communication device D1. According to other embodiments, the unique identifier may be assigned at later stages.

This unique identifier uuid1 will publicly identify the mobile communication device and is representative of its user, while not jeopardizing the user's privacy, as mentioned above. It may be valid only during a certain time, i.e. a session for instance.

Different methods can be used by the registration service S1 to assign a unique identifier to the requiring mobile communication devices: hash code from the provided private information, random chain, etc. to ensure confidentiality of the unique identifier and security of the transaction.

The registration service S1 maintains the associations between the private identifiers and the unique identifiers it assigns for each registered device.

Once assigned, the unique identifier uuid1 is transmitted back to the mobile communication device D1, which can then start broadcasting it through the proximity radio network (reference M22 in FIG. 2).

Similarly, the second communication device D2 can send a registration request m20 to the registration service S1 and receives its unique identifier uuid2 as a message m21 and broadcasts it as a message m22 through the proximity radio network.

In a next step, the mobile communication devices D1, D2 can mutually detect themselves by detecting the respective unique identifiers by sensing the proximity radio network.

According to an embodiment of the invention, when a device detects the unique identifier of another mobile communication device, it sends a verification request to the registration service and receives private data associated with the detected device. This private data can be all or part of the private identifier provided by this device during the initialization phase INIT, or derived from it.

For instance, the registration service S1 may either use its own private data as they have been provided by the user during registration or, alternatively, retrieve from the private information some other data from a third party server, like a photography, user name, UDI, etc. and provide it as private data which have been anonymized and are provided as one unique identifier to the requesting device(s).

Private data, or a part of them, can be shown to the user thanks to the human-machine interface of the mobile communication device, so as to allow him or her to validate the user.

This optional step can be useful for security purpose, but also to select the "right" user with whom a transaction can be completed when several mobile communication devices are present in the neighborhood and detected.

In the example of FIG. 2, the first mobile communication device D1 detects a unique identifier uuid2 and sends a verification request m30 to the registration service S1. It can then receive private data related to the second mobile communication device D2 as a message m31.

Similarly, the second mobile communication device D2 detects a unique identifier uuid1 and sends a verification request m40 to the registration service S2. It can then receive private data related to the first mobile communication device D1 as a message m41.

According to some embodiments of the invention, it may be sufficient for one mobile communication device to detect the other one to trigger the creation of a transaction. Depending on the type of transaction (payment, loan...) and the direction, the second party may not need to perform the verification steps, and to send a creation request 42 to the active transaction service S2. This is the reason why the corresponding steps are put into a boxed zone OPT, corresponding to optional steps.

The requests for creation of a transaction m32, m42 may be sent by one or both parties D1, D2 to the active transaction service S2. These request(s) contain(s) information about the devices, allowing the active transaction service S2 to determine who are the corresponding users of the devices so as to create a transaction between them.

This information may be an account number or any personal information enabling the active transaction service S2 to recover the corresponding account number. They may correspond, partly or fully, to the personal data provided by the registration service S1, at verification steps m31, m41, or any private information kept by the devices. For instance, the mobile communication device D1 can send its own private information (e.g. the account number of the user of this device), or the personal data of the device D2 received through message m31 (e.g. the account number of the user of the device D2). The unique identifier can also be used.

At receipt of a first request for creation m32, issued by the first mobile communication device D1, the active transaction service S1 can actually create the transaction for both parties, on the basis of the information contained by the creation request(s). Typically, in case of financial transactions, the information identifies accounts between which the transaction will be performed. As said above, a transaction can be triggered by one, two or more requests for creation as the case may be depending on the number of devices/users.

If and when it receives the second request for creation m42, issued by the second communication device D2, the active transaction service S2 may correlate the data contained by this request and determine it corresponds to an active transaction.

This second request for a same transaction (D1, D2) may be required to activate the transaction. For instance, according to an embodiment of the invention, the active transaction service S2 may wait for the reception of creation requests issued by all parties to this transaction before actually activating it.

The active transaction service S2 may then send confirmation messages to the mobile communication devices to activate the transaction. Confirmation messages m33, m43 may be sent as response to creation messages issued by respective mobile devices. In addition, according to some embodiments, the activation may trigger the transmission of confirmation messages to all parties of the transaction. After activation, the confirmation messages may comprise further information, like for instance a name for the transaction, a tag indicating that the transaction is activated, etc.

Consequently, in the example of FIG. 2, the first mobile communication device D1 receives a confirmation message m33 as a reaction of its own creation request m32, and, later, a confirmation message m44 as a reaction to the activation.

These confirmation messages enable the mobile communication devices to place a transaction confirmation message m50 to the active transaction service. This transaction confirmation message comprises the required information for the active transaction service to complete said transaction between the devices.

Once the confirmation message received from the active transaction service S2, after the activation of the transaction, the mobile communication device D1 can show data related to the transaction to the user, through the human-machine interface of the device D1.

The device can also interact with the user to have him/her imputing additional data. In the example of a financial transaction, such an input can comprise a transaction amount (e.g. price, etc.). The transaction confirmation message may then comprise data determined (directly or indirectly) from these inputs.

In the example depicted on FIG. 2, only one transaction confirmation message m50 is transmitted to the active transaction service S2. In other embodiments, more messages can be transmitted from one or multiple parties of the transaction. For instance, the parties can

negotiate for some parameters of the transaction (e.g. its amount) and several transaction confirmation messages can be emitted by the mobile communication devices in order for additional parameters to be progressively agreed until an agreement is met.

According to embodiments, the active transaction service S2 sends the parameters transmitted by a first device to the other one, for confirmation. For instance, the amount of the transaction inputted by the first device is sent to the second device, which can show it to the user for confirmation.

The man skilled in the art can design various embodiments to perform the validation of a transaction and many variations in the interactions between the mobile communication devices D1, D2 and the active transaction service S2.

Once the active transaction service S2 determines that the transaction can be completed, it performs the required steps to complete it. For instance, in the case of a financial transaction, the active transaction service S2 can complete the transaction in cooperation with a transaction completion service S3. As said above, this transaction completion service S3 may be embodied by another server, for instance beholding to a trusted financial entity like a bank.

The completion of a financial transaction by a banking service is known in art, and will allow deploying the mechanisms of the invention independently of the sensible mechanisms related to account and private information handled only by the trusted banking service.

The message m51 sent by the active transaction service S2 to the transaction completion service S3 may contain account numbers of the users of the mobile communication devices and the amount of the transaction and any other data required by the transaction completion service S3.

In case the transaction completion service S3 is implemented at multiple banks, multiple completion messages m51 may need to be transmitted, so as to allow real-time handling of the transaction.

Once the transaction completed, the active transaction service S2 may send information messages m52, m53 to the mobile communication devices D1, D2 to inform them about the status of the transaction, including the result of the effective financial transaction performed by the transaction completion service S3. The status can be shown to the users by the human-machine interface of the respective mobile communication devices D1, D2.

The invention allows real-time handling of transactions. At each steps, a reporting can be implemented to the mobile communication device and, if required to its user.

As it has been seen above, the invention consists in a flexible mechanism allowing many variants and embodiments. It can then adapt to various applications and types of transactions.

Furthermore, the invention can be embodied with minimal impacts on the existing infrastructure. More particularly, only software modules deployed inside the state-of-the-art mobile communication devices and inside servers are needed to perform the method according to the invention. Some specific hardware circuitry may be designed to optimize some aspects of the invention, but this would only be particular embodiment.

The invention allows symmetric behaviors, but some asymmetric behaviors are also possible. For instance one device may receive money from other device. In such a case the confirmation from the receiving device may be implicit and no interaction between the device and the active transaction service and between the user and the device are required.

Also, the broadcast of the unique identifier may be triggered by a dedicated application deployed within the mobile communication device. This broadcast may be performed only at need, i.e. when the user wants to start a transaction, but it can also be always and continuously performed, so as to allow receiving transaction requests from another party at any moment,

The invention has been described with reference to preferred embodiments. However, many variations are possible within the scope of the invention.

## Claims

1. Method for performing a transaction between users of communication devices, comprising steps of:
- a first device (D1) and a second device (D2) broadcasting respective unique identifiers (uuid1, uuid2), through a proximity radio communication network;
- said first device detecting the unique identifier (uuid2) of said second device; and transmitting to an active transaction service (S2) a request for creation of a transaction with said second device; said request containing information about said first device and said second device;
- said active transaction service (S2) creating said transaction on the basis of said information

2. Method according to claim 1, wherein said active transaction service (S2) provides to said first device a confirmation message (m33, m44) enabling said first device to place a transaction confirmation message (m50) to said active transaction service (S2), said transaction confirmation message comprising the required information for said active transaction service to complete said transaction between said devices.

3. Method according to claim 2, wherein said transaction confirmation message comprises data determined by inputs of said first user through a human-machine interface of said first device.

4. Method according to any of claims 1 to 3, comprising a registration step consisting for said devices in sending a registration request containing a private identifier to a registration service (S1), so that said registration service maintains associations between private identifier and unique identifier for each registered device.

5. Method according to the previous claim, wherein said unique identifiers are assigned by said registration service (S1).

6. Method according to any of the previous claim, wherein after said first device detects said unique identifier of said second device, it sends a verification request to said registration service (S1) and receives a private data associated with said second device.

7. Method according to the previous claim, wherein said first device shows to said first user at least a part of said private data to enable said first user to validate the second user.

8. Method according to claim 2, wherein said information comprises said second account number and a first account number,

9. Computer program comprising computer-executable instructions for performing the method according to any of the previous claims when run onto a data processing unit.

10. System comprising at least a first and a second communication devices, and an active transaction service (S2) for performing a transaction between users of said communication devices,
- wherein said first device (D1) and a second device (D2) are adapted for broadcasting respective unique identifiers (uuid1, uuid2), through a proximity radio communication network;
- wherein said first device is adapted for detecting the unique identifier (uuid2) of said second device; and transmitting to said active transaction service (S2) a request for creation of a transaction with said second device; said request containing information about said first device and said second device;
- and wherein said active transaction service (S2) is adapted for creating said transaction on the basis of said information,

11. System according to claim 10, wherein said active transaction service (S2) is adapted to complete said transaction in cooperation with a transaction completion service (S3).

12. System according to claim 10 or 11, wherein said devices are adapted to perform a registration step consisting in sending a registration request containing a private identifier to a registration service (S1), so that said registration service maintains associations between private identifier and unique identifier for each registered device.

13. System according to claim 12, wherein said unique identifiers are assigned by said registration service (S1).

14. System according to claim 12 or 13, wherein said active transaction service and said registration service are embodied by a same server (S).

15. System according to claim 11, wherein said active transaction service and said transaction completion service are embodied by two different servers.
